# FASCICULE DE BREVET EUROPEEN

(11) **EP 1 928 590 B1**
(45) Date de publication et mention de la délivrance du brevet: **28.11.2018**
(21) Numéro de dépôt: 06806839.4
(22) Date de dépôt: 26.09.2006
(51) Int. Cl.: B01J 3/00, A62D 3/00, B01J 8/00, B01D 65/08

(54) **REACTEUR POUR LE TRAITEMENT D'UNE MATIERE DANS UN MILIEU REACTIONNEL FLUIDE**
REAKTOR ZUR BEHANDLUNG EINER SUBSTANZ IN EINEM FLÜSSIGEN REAKTIONSMEDIUM
REACTOR FOR TREATING A SUBSTANCE IN A FLUID REACTION MEDIUM

(30) Priorité: 28.09.2005 FR 0552924
(43) Date de publication de la demande: 11.06.2008
(73) Titulaire: Commissariat à l'Énergie Atomique et aux Énergies Alternatives, 75015 Paris (FR)
(72) Inventeur: TURC, Hubert-Alexandre, F-30133 Les Angles (FR); JOUSSOT-DUBIEN, Christophe, F-30650 Rochefort du Gard (FR)
(74) Mandataire: Ahner, Philippe
(86) Numéro de dépôt international: PCT/EP2006/066762
(87) Numéro de publication internationale: WO 2007/036526

(56) Documents cités:
- EP-A- 0 860 182
- WO-A-03/064021
- WO-A-2005/087354
- WO-A-2006/080959
- US-A- 3 056 664
- US-A- 5 421 998
- US-A- 5 997 743
- US-B1- 6 403 729
- LORA J ET AL: "THE EFFECT OF AGITATION ON REVERSE OSMOSIS DESALINATION" DESALINATION, ELSEVIER, AMSTERDAM, NL, vol. 79, no. 2 / 3, 1 décembre 1990 (1990-12-01), pages 261-269, XP000244546 ISSN: 0011-9164

## Description

L'invention concerne un réacteur pour le traitement d'une matière dans un milieu, comportant un corps étanche dans lequel est définie une zone réactionnelle apte à contenir un milieu réactionnel, au moins une entrée pour l'introduction du milieu réactionnel à la zone réactionnelle, au moins une sortie pour l'évacuation d'effluents hors de la zone réactionnelle.

Elle concerne également un procédé de détection d'un défaut d'intégrité d'une enveloppe protectrice de réacteur, comportant un corps, l'enveloppe protectrice étant logée dans le réacteur et espacée du corps pour délimiter une zone réactionnelle apte à contenir un milieu réactionnel et une zone de confinement qui isolant de manière étanche la zone réactionnelle du corps.

Dans le domaine des procédés sous pression pour le traitement de matières, en particulier de déchets, on identifie deux grandes familles de procédés utilisant l'eau comme milieu réactionnel : les procédés d'oxydation par voie humide (OVH) et les procédés d'oxydation hydrothermale (OHT). L'OVH se caractérise par des conditions de température et de pression inférieures aux conditions critiques de l'eau. Elle opère de ce fait en conditions diphasiques et conduit à des cinétiques de minéralisation d'un, voire deux ordres de grandeurs plus longues que celle obtenues en OHT.

Les procédés d'oxydation hydrothermales (OHT) dans l'eau supercritique utilisent les propriétés particulières de l'eau pour une pression et une température supérieures à 221 bar et 374°C et en particulier sa faible constante diélectrique permettant la solubilisation de composés hydrophobes, ses faibles densité et viscosité permettant le mélange en toutes proportions avec des composés gazeux. Le milieu réactionnel obtenu permet un mélange intime et homogène entre des composés organiques et l'oxygène faisant fonction de carburant et de comburant dans la réaction de minéralisation qui peut alors s'amorcer spontanément grâce à la température du milieu. Les gaz tels que O₂, CO₂, N₂ sont totalement solubles dans l'eau ainsi que de nombreux alcanes. Ces combustions peuvent alors se dérouler sans la limitation de transfert interphase généralement observée aux basses températures ou aux basses pressions, comme dans les incinérateurs ou les procédés d'oxydation par voie humide et conduire à une minéralisation totale de la matrice organique en des temps de séjour inférieurs à la minute. Les procédés d'OHT sont donc particulièrement adaptés au traitement de déchets organiques nécessitant une destruction totale de leur matrice organique.

L'invention s'applique tant aux procédés OVH qu'aux procédés OHT que nous appellerons dans leur globalité procédés en eau sous pression. Toutefois, Les procédés OHT constituent son application préférée. En effet, les conditions opératoires à hautes températures et à hautes pressions de l'OHT rendent sa mise en oeuvre encore plus avantageuse.

On connaît déjà (FR-2 814 967) un procédé et un réacteur de ce type. Le réacteur comporte un corps dans lequel est disposé un tube interne qui délimite extérieurement une zone annulaire avec le corps et intérieurement, une zone centrale appelée lumière. Le tube interne comporte une première extrémité fixée à une première extrémité du corps et une seconde extrémité qui laisse subsister un passage de communication entre la zone annulaire et la zone centrale. Selon le procédé, les constituants du milieu supercritique, à savoir l'eau et un oxydant, sont introduits au voisinage de la première extrémité du réacteur sous une pression supérieure 22,1 MPa. Ils sont chauffés à une température supérieure à 374°C dans la zone annulaire puis introduits dans le tube interne au niveau de la deuxième extrémité du réacteur en même temps que la matière à traiter. Un mélange du fluide eau/oxydant sous pression chauffé et de la matière à traiter est oxydé dans une première partie du tube interne puis refroidi dans une deuxième partie de ce tube.

Un réacteur de ce type présente toutefois plusieurs inconvénients.

Les matériaux des enceintes réactionnelles d'OHT doivent résister à la corrosion qui se développe sous température et pression. Les aciers inoxydables et les alliages nickelés sont des matériaux permettant la réalisation de pièces sous pression dans des géométries classiques pouvant supporter simultanément des températures élevées. Cependant, les aciers inoxydables sont inadaptés dans le cas de déchets salins, acides ou basiques car la couche de passivation formée par l'oxyde ou l'hydroxyde de chrome n'est pas stable. Le chlorure et le phosphate se montrent en effet particulièrement agressifs envers l'acier lors de la transition critique rencontrée dans les échangeurs sous pression des procédés d'OHT.

La couche de passivation formée par l'oxyde de nickel (NiO) dans le cas des alliages à base de nickel est plus stable sous réserve que le pH de la solution soit suffisamment neutre. Les vitesses de corrosion dépendent de la nature des formes acides dans le milieu réactionnel et on observe que ces alliages sont plus sensibles à des acides pouvant faire passer en solution plus facilement les produits de corrosion. Les alliages à base de nickel sont insuffisants pour convenir au traitement d'OHT de déchets à grande variabilité de composition en acides bases et sels.

D'autre part, le procédé et le réacteur ne prévoient aucune filtration pour séparer les sels précipités.

On connaît d'autre part ([1] et brevet US 5 421 998 (Li et al.)) un procédé de filtration frontal dans lequel un fritté poreux est traversé par le fluide à filtrer. Dans ce procédé, l'accumulation de matières solides devant le filtre n'est limitée que par la turbulence résultant du débit d'injection du fluide dans le réacteur. Il s'en suit une accumulation de matière sur le filtre, ce qui conduit à une diminution de l'efficacité de la filtration.

Enfin, aucun des procédés antérieurs ne prévoit de récupération efficace et de gestion de l'énergie thermique dégagée par la réaction d'OHT. EP-A-0 860 182 décrit un réacteur d'oxydation.

L'invention propose un réacteur et un procédé pour le traitement d'une matière dans un milieu réactionnel fluide qui remédient à ces inconvénients.

Ces buts sont atteints par le fait que le réacteur selon la revendication 1 comporte une enveloppe protectrice disposée à l'intérieur du corps et délimitant la zone réactionnelle, l'enveloppe étant espacée du corps de manière à délimiter une zone de confinement isolant la zone réactionnelle du corps, la zone réactionnelle et la zone de confinement étant isolées l'une de l'autre de manière étanche.

Grâce à cette caractéristique, le corps du réacteur est isolé du milieu réactionnel. La zone de confinement contient un fluide neutre vis-à-vis du matériau constituant le réacteur. Ce dernier peut par conséquent être réalisé en un acier présentant exclusivement des propriétés de résistance mécanique. Le réacteur est donc moins coûteux à réaliser.

L'enveloppe protectrice subit peu de contraintes mécaniques parce qu'elle est soumise sensiblement à la même pression sur chacune de ses faces. Elle peut par conséquent être réalisée en un matériau présentant une bonne résistance à la corrosion mais une faible résistance mécanique, par exemple le titane. En conditions oxydantes ce dernier forme une couche de passivation d'oxyde de titane qui est stable dans un large domaine de pH. Le titane et ses alliages résistent à la corrosion par HCl sur une plus large gamme de température que les alliages d'aciers inoxydables et de nickel et ils présentent en outre l'avantage de ne pas relarguer les toxiques Ni²⁺ et Cr⁶⁺ dans l'effluent.

La zone réactionnelle contient un milieu fluide sous pression, la zone de confinement contenant un fluide de confinement en surpression par rapport la pression du fluide de la zone réactionnelle, le réacteur comportant en outre un dispositif de mesure pour mesurer une consommation de fluide de confinement en cas de rupture de l'étanchéité de l'enveloppe protectrice.

Le réacteur comporte une capacité de pressurisation contenant une quantité de fluide de confinement, la capacité de pressurisation étant reliée à la zone de confinement par une canalisation de manière à permettre l'alimentation de la zone de confinement en fluide de confinement, une canalisation d'alimentation de la zone réactionnelle en milieu fluide réactionnel, un piquage reliant la canalisation d'alimentation de la zone réactionnelle à la capacité de pressurisation de manière à mettre le fluide de confinement à la pression du milieu fluide réactionnel, un clapet anti-retour à chute de pression étant interposé entre le piquage et la zone réactionnelle afin de créer une différence de pression entre la pression du fluide de confinement dans la capacité de pressurisation et la pression du milieu fluide réactionnel dans la zone réactionnelle, un moyen de mesure mesurant une consommation du fluide de confinement contenu dans la capacité de pressurisation.

Grâce à ces caractéristiques, il est ainsi possible de détecter un défaut de l'intégrité de l'enveloppe protectrice en mesurant en continu la différence de pression. En cas de percement de l'enveloppe protectrice, le fluide remplissant la capacité de pressurisation se vide progressivement dans l'enceinte réactionnelle et est remplacé par de l'air sous pression dans la capacité de pressurisation. Une détection ou une mesure de niveau dans cette capacité permet de détecter la rupture de l'intégrité de la barrière de protection et d'asservir l'arrêt du procédé. En cas de percement, le gradient de pression de part et d'autre de l'enveloppe protectrice confine les produits corrosifs dans la zone centrale par une fuite entrante de fluide de pressurisation. Le corps du réacteur n'est ainsi jamais en contact avec des produits pouvant altérer son intégrité.

L'invention s'applique ainsi avantageusement aux traitements des effluents organiques de l'industrie nucléaire. En effet l'enveloppe protectrice de l'enceinte réactionnelle confère un degré supplémentaire dans l'analyse de sûreté du procédé d'OHT par rapport aux installations connues, notamment le procédé et le réacteur décrit dans le brevet FR 2 814 967 cité plus haut. Dans un réacteur de ce type, les réactions et les composés induisant de la corrosion de la paroi du corps du réacteur sont confinés à distance de celui-ci. Le réacteur de l'invention complète cet avantage en apportant la possibilité d'un diagnostic de l'intégrité de cette barrière en fonctionnement et d'un confinement dynamique des éléments potentiellement corrosifs en cas de percement de cette barrière.

Le réacteur comporte un échangeur de chaleur disposé dans la zone de confinement et intégré à un circuit primaire de circulation d'un fluide caloporteur afin de réaliser un échange de chaleur entre le fluide caloporteur circulant dans l'échangeur et le milieu réactionnel contenu dans la zone réactionnelle.

L'utilisation de l'enveloppe protectrice baignant de part et d'autre dans un fluide sous pression permet d'utiliser des tuyauteries en acier inoxydable pour réaliser l'échangeur de chaleur car ce dernier est soumis à une contrainte de compression et non à une contrainte de traction comme le corps du réacteur. Les parois de l'échangeur peuvent donc être minces, tout comme celles de l'enveloppe protectrice. Le transfert de chaleur entre le milieu réactionnel et le fluide caloporteur est fortement amélioré par rapport à une configuration classique dans laquelle l'échangeur est placé sur la paroi externe du réacteur.

Dans une réalisation avantageuse, le circuit primaire de circulation du fluide caloporteur intègre un échangeur secondaire et/ou une résistance électrique asservis à l'extraction, respectivement à l'apport de puissance thermique de/à la zone réactionnelle et la puissance thermique extraite du circuit primaire est valorisé sous forme d'énergie électrique, de puissance de chauffe ou d'énergie pneumatique.

Le réacteur comporte un tube interne placé à l'intérieur de l'enveloppe protectrice et lié de manière étanche à une première extrémité au corps ou à l'enveloppe protectrice, le volume intérieur du tube étanche déterminant une zone centrale, le tube délimitant une zone annulaire avec l'enveloppe protectrice, un passage de communication entre la zone centrale du tube et la zone annulaire étant prévu à une seconde extrémité du tube, une turbine d'agitation comportant des pales brassant le milieu réactionnel de la zone centrale et des pales brassant le milieu réactionnel de la zone annulaire.

Selon le procédé de détection d'un défaut d'intégrité de l'enveloppe protectrice du réacteur :
- on introduit le milieu fluide réactionnel dans la zone réactionnelle ;
- on introduit un fluide de confinement dans la zone de confinement à partir d'une capacité de pressurisation ;
- on met en pression le milieu fluide réactionnel de la zone réactionnelle et le fluide de confinement de la capacité de pressurisation en établissant une surpression dans la zone de confinement par rapport à la zone réactionnelle ;
- on mesure une consommation du fluide de confinement afin de détecter une éventuelle rupture de l'enveloppe protectrice.

Conformément à une autre caractéristique, le réacteur de l'invention comporte un filtre pour séparer le milieu réactionnel en un perméat débarrassé de ses précipités et un rétentat concentrant les sels et une turbine d'agitation permettant de brasser le milieu réactionnel afin de le maintenir dans un régime hydraulique turbulent et empêcher une accumulation de rétentat solide devant le filtre.

Avantageusement la turbine est entraînée magnétiquement et le filtre présente la forme d'un cylindre disposé coaxialement au tube interne.

De façon complémentaire ou alternative, l'effluent traverse un échangeur de chaleur, par exemple un serpentin, de manière à être en relation d'échange thermique avec la matière à traiter.

D'autres caractéristiques et avantages de l'invention apparaîtront encore à la lecture de la description qui suit d'un exemple de réalisation donné à titre illustratif en référence aux figures annexées. Sur ces figures :
- la figure 1 est une vue en coupe longitudinale d'un réacteur conforme à la présente invention ;

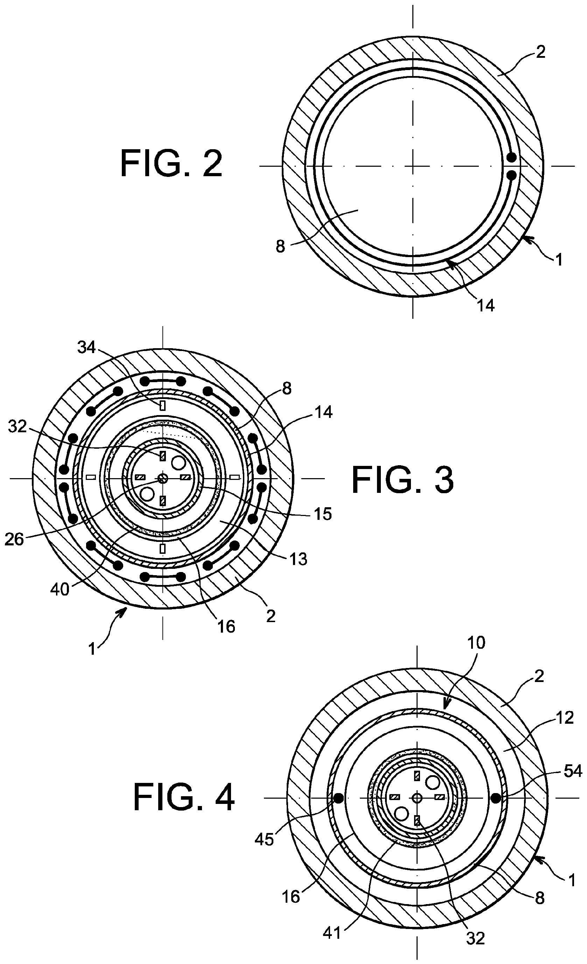

- la figure 2 est une vue en coupe selon la ligne II-II de la figure 1,
- la figure 3 est une vue en coupe du réacteur de la figure 1 selon la ligne III-III;
- la figure 4 est une vue en coupe selon la ligne IV-IV du réacteur représenté sur la figure 1 ;
- la figure 5 est une vue en coupe schématique qui illustre la configuration de la gestion thermique de la zone réactionnelle.

Sur les figures, le réacteur, désigné par la référence générale 1, est constitué d'un corps 2 de forme générale cylindrique d'axe XX fermé à sa partie supérieure par un fond et à sa partie inférieure par un couvercle 4.

L'extrémité inférieure du réacteur 1 est maintenue froide par une double enveloppe 6 dans laquelle circule un fluide de refroidissement, par exemple de l'eau. Cette disposition permet d'assurer l'étanchéité à haute pression à froid entre le corps 2 et le couvercle 4 par un joint en viton ou de type métallique.

Une enveloppe protectrice 8 est disposée à l'intérieur du corps 2 et espacée de celui-ci de manière à délimiter, intérieurement, une zone réactionnelle 10 et, extérieurement, une zone de confinement 12 isolées l'une de l'autre de manière étanche.

L'enveloppe protectrice 8 présente une forme générale cylindrique borgne à son extrémité supérieure. Elle est montée de manière coaxiale au corps 2 du réacteur et est dimensionnée de telle sorte que les jeux sur le diamètre et la longueur de l'enveloppe puissent être minimisés. Elle est réalisée en un matériau non poreux mais résistant à la corrosion comme le titane.

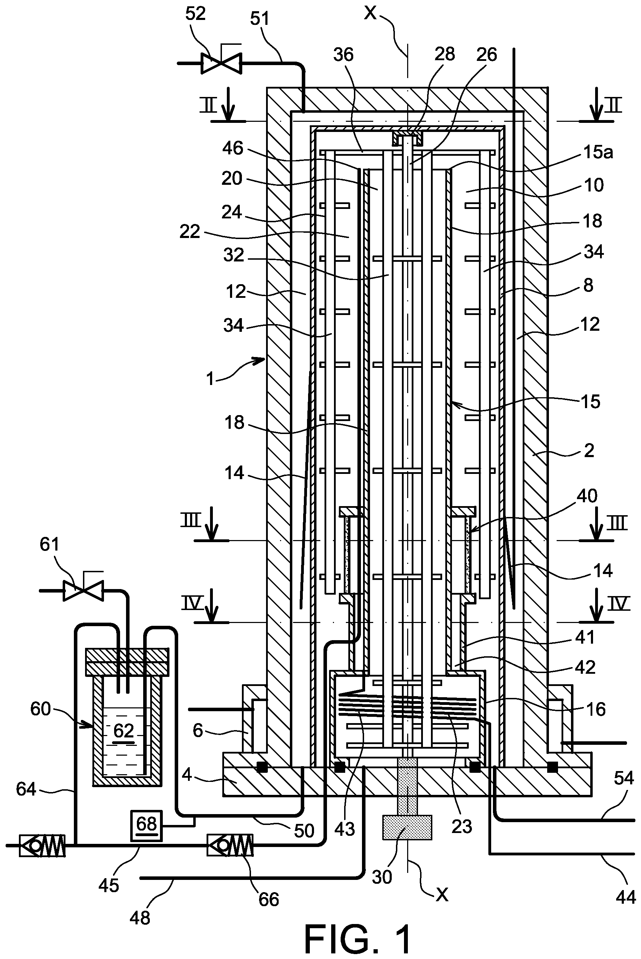

La fixation de cette enveloppe peut être réalisée sur le couvercle, comme représenté sur la figure 1, ou sur le corps 2 du réacteur. L'étanchéité entre l'enveloppe et le corps et le couvercle est assurée à froid par un joint en viton, par exemple.

La zone réactionnelle est alimentée en milieu fluide réactionnel par une canalisation d'alimentation 45. Une capacité de pressurisation 60 contient une quantité 62 de fluide de confinement. Elle est reliée à la zone de confinement par une canalisation 50 de manière à permettre son alimentation en fluide de confinement. Un piquage 64 relie la canalisation d'alimentation 45 de la zone réactionnelle à la capacité de pressurisation 60 de manière à mettre le fluide de confinement 62 à la pression du milieu fluide réactionnel. Un clapet anti-retour à chute de pression 66 est interposé entre le piquage 64 et la zone réactionnelle afin de créer une différence de pression entre la pression du fluide de confinement 62 dans la capacité de pressurisation 60 et la pression du milieu fluide réactionnel dans la zone réactionnelle. Un moyen de mesure 68 mesure la consommation du fluide de confinement contenu dans la capacité de pressurisation.

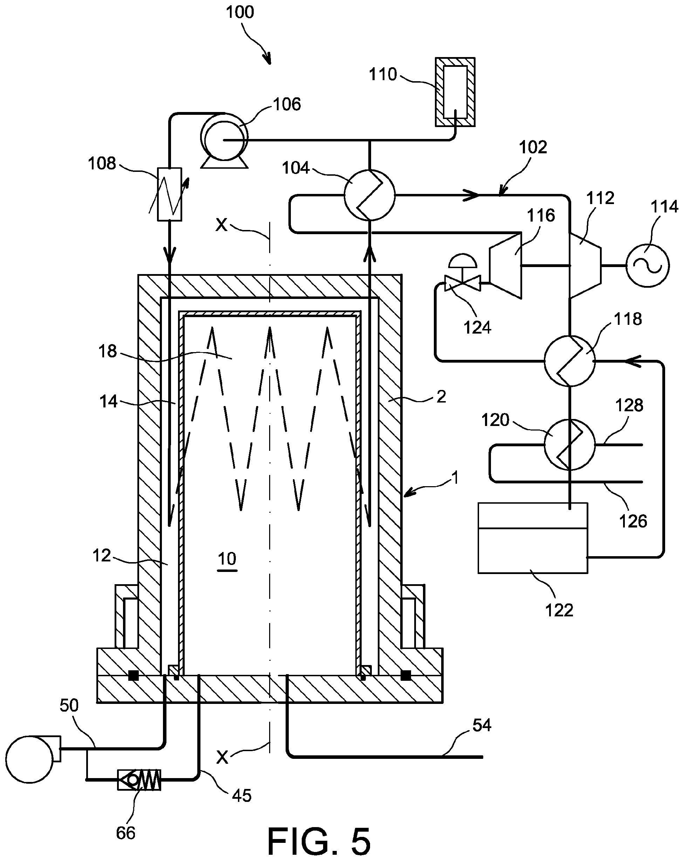

Un échangeur de chaleur primaire 14 est prévu dans la zone annulaire 12. La circulation d'un fluide caloporteur dans cet échangeur permet le chauffage ou l'extraction de puissance thermique de la zone réactionnelle. Elle permet également de contrôler, c'est-à-dire de limiter, les gradients thermiques le long du réacteur. L'échangeur 14 fait partie d'un circuit primaire 100 (voir figure 5) qui fait lui-même partit d'un système de gestion et de valorisation de l'énergie thermique de la zone réactionnelle. La constitution et le fonctionnement de ces systèmes seront expliqués plus en détail ultérieurement en référence à la figure 5.

L'utilisation de l'enveloppe protectrice 8 baignant de part et d'autre dans un fluide sous pression permet d'utiliser des tuyauteries en acier inoxydable pour réaliser l'échangeur de chaleur interne 14 qui est soumis à une contrainte de compression et non de traction comme le matériau du réacteur. Les parois de l'échangeur peuvent donc être minces, tout comme celles de l'enveloppe protectrice et le transfert de chaleur entre le milieu réactionnel et le fluide caloporteur est grandement amélioré par rapport à une configuration plus classique où l'échangeur est placé sur la paroi externe du réacteur.

Un tube interne désigné dans son ensemble par la référence 15, est disposé dans la zone réactionnelle 10 coaxialement à l'axe XX du corps. Il comporte une partie inférieure 16 de plus grand diamètre et une partie supérieure 18 de plus petit diamètre. Le tube 15 comporte une extrémité ouverte 15a qui ménage un passage de communication entre la zone centrale 20 et la zone annulaire 22.

Une turbine d'agitation 24, disposée dans la zone réactionnelle 10 comporte un axe 26 central d'axe XX guidé en rotation par un centreur 28 solidaire de l'enveloppe protectrice 8. La turbine est mise en rotation, par exemple au moyen d'un entraînement magnétique 30 monté sur le couvercle 4. Elle comporte des pales 32 parallèles à l'axe 26 disposées dans le tube interne 18 et des pales 34, également parallèles à l'axe 26, disposées dans la zone annulaire réactive 22. Les pales 32 de la zone centrale 20 et les pales 34 de la zone annulaire 22 sont reliées par un accouplement 36.

Les transferts de chaleur de et vers l'échangeur primaire 14 sont améliorés si l'écoulement des fluides dans la zone annulaire réactionnelle 22 est turbulent. Ce point est garanti par l'agitation au moyen des pales 34. L'homogénéité dans la zone réactionnelle est également garantie par ce dispositif, même dans le cas où les mouvements de fluide sont limités dans le sens de l'écoulement pour approcher une distribution de temps de séjour semblable à celle qui existe dans un écoulement de type piston. La turbine d'agitation 24 permet donc de découpler le transfert de chaleur de l'écoulement du fluide procédé.

La totalité des équipements internes à la zone réactionnelle opère à une quasi-équipression ce qui permet de retenir des matériaux et des géométries sans avoir à tenir compte d'impératifs de tenue mécanique à la pression. Le tube injecteur de déchets, l'injecteur d'oxydant et l'échangeur de sortie sont réalisés en des matériaux résistants à la corrosion d'OHT, comme le titane et leurs épaisseurs peuvent être minimisées pour améliorer le transfert thermique dont ils sont le siège.

Un dispositif de filtration cylindrique 40 est monté coaxialement au tube interne d'injection 15 et plus précisément, à la partie 18 de plus petit diamètre de ce tube. Le dispositif de filtration 40 est prolongé vers le bas par une virole 41 également coaxiale à l'axe XX du tube d'injection 15 et qui délimite un espace annulaire 42 avec le tube 15.

Un tube 43 enroulé en serpentin formant un échangeur de chaleur débouche à une extrémité dans la zone annulaire 42 et à une autre extrémité 44 à l'extérieur du réacteur 1.

Une canalisation 45 pour l'amenée d'un oxydant, par exemple de l'air sous pression, traverse le couvercle 4 au niveau de la zone annulaire réactionnelle 22. La canalisation 45 s'étend, sensiblement parallèlement à l'axe XX sur toute la longueur du tube interne 15 de manière à présenter une extrémité 46 qui débouche au voisinage de l'extrémité supérieure 15a de ce tube.

Le déchet à traiter pénètre sous pression et au débit nominal par une canalisation 48 qui traverse le couvercle 4 pour déboucher à l'intérieur de la zone centrale réactionnelle 20. Enfin, une canalisation 50 permet d'introduire un milieu fluide sous pression par exemple de l'eau, dans la zone de confinement 12. Avantageusement la zone de confinement est en surpression par rapport à la zone réactionnelle, ce qui permet de détecter une rupture de l'étanchéité de l'enveloppe protectrice.

Une canalisation 51 sur laquelle est montée une vanne de purge de fluide 52 est montée à la partie supérieure du corps 2.

Enfin, une canalisation 54 traverse le couvercle au niveau de la zone réactionnelle 52.

Le procédé de traitement de la matière se déroule de la manière suivante.

La matière à traiter pénètre dans la zone centrale 20 par la canalisation 48 à la pression et au débit nominal sous forme entièrement liquide, ou sous la forme d'une suspension aqueuse contenant des particules de matière solides en suspension. La matière à traiter se réchauffe en circulant à contre courant de l'effluent fluide qui circule dans l'échangeur 43 disposé dans la partie de plus grand diamètre 16 du tube d'injection 15. La matière à traiter parcourt ensuite la partie de plus petit diamètre 18 du tube d'injection de son extrémité inférieure jusqu'à son extrémité ouverte 15a. Etant donné que l'extrémité 46 du tube permettant l'injection d'un oxydant dans la zone réactionnelle 10 débouche au voisinage de l'extrémité 15a du tube d'injection, toute la zone centrale 20 est en condition d'anoxie. Il est possible d'optimiser l'emplacement de l'injecteur d'oxydant 46 et d'exploiter une partie de la zone réactionnelle en conditions supercritiques mais en anoxie. Selon la position de l'injection d'air, le déchet contenu dans la zone d'injection centrale peut être maintenu intégralement, partiellement ou pas du tout en conditions anoxiques avant que ne commence la combustion oxydante.

L'oxydant peut être introduit sous forme gazeuse (air ou air enrichi en oxygène, ozone, etc) ou liquide (oxygène liquide, peroxyde d'hydrogène, etc.).

La matière à traiter parcourt ensuite la zone annulaire réactionnelle 22 de haut en bas jusqu'au filtre microporeux 40. L'agitateur à pales droites 24 permet de garantir des conditions de turbulence telles que la filtration est assurée dans des conditions analogues à une filtration tangentielle et non comme une filtration de type frontal en évitant la formation d'un gâteau, c'est-à-dire d'une accumulation de matière solide devant le filtre. La formation de ce gâteau est classique en filtration frontale. Elle diminue fortement la capacité filtrante de l'élément. Dans le régime turbulent recherché dans le réacteur de l'invention, un flux tangentiel au filtre est maintenu pour éviter cette accumulation de manière à garantir une efficacité de filtration la plus constante possible au cours du temps.

Le système de valorisation de l'énergie de combustion est constitué d'un circuit primaire 100 et d'un circuit secondaire 102. Le circuit primaire 100 comporte l'échangeur primaire 14, déjà décrit précédemment, situé dans le réacteur 1. Il comporte en outre un échangeur secondaire 104 commun au circuit primaire et au circuit secondaire. Un circulateur à haute température 106 fait circuler en permanence le fluide caloporteur dans le circuit primaire. Optionnellement, un réchauffeur électrique 108 est monté sur le circuit primaire. Le réchauffeur électrique 108 est utilisé en phase de démarrage du réacteur, avant l'introduction du déchet et la production de chaleur par la réaction d'OHT. Il peut également être utilisé en phase d'exploitation comme alternative à l'adjonction d'un carburant pour maintenir la température opératoire dans le réacteur.

Le circuit primaire comporte également une capacité d'expansion 110 qui permet de maintenir le fluide caloporteur dans le circuit primaire à la pression du réacteur.

Le circuit secondaire comporte, outre l'échangeur secondaire 104 déjà mentionné, une turbine 112 qui entraîne un alternateur-démarreur 114 et un compresseur 116. En aval de la turbine 112, dans le sens de circulation du fluide secondaire, on trouve un échangeur récupérateur de chaleur 118 puis un second échangeur récupérateur de chaleur 120. Une bâche d'eau 122 est située après les récupérateurs de chaleur 118 et 120. A partir de la bâche d'eau, le fluide secondaire à l'état liquide est échauffé dans le récupérateur de chaleur 118 dans lequel il est vaporisé. Il est comprimé dans le compresseur 116 après avoir traversé la vanne d'arrêt 124. Il circule ensuite dans l'échangeur secondaire 104 dans lequel il récupère la chaleur dégagée par le circuit primaire, et par conséquent par la réaction d'OHT. La vapeur portée à haute température entraîne la turbine 112 qui permet de produire de l'électricité à l'aide de l'alternateur 114. La vapeur est refroidie une première fois dans le récupérateur de chaleur 118, en échange de chaleur avec l'eau provenant de la bâche 122, puis une seconde fois dans le récupérateur de chaleur 120 dans lequel le fluide secondaire cède sa chaleur résiduelle non convertie en électricité à un réseau d'utilité d'eau chaude (chauffage ou process) au raccordement 128 (circulateur non représenté).

Le circuit secondaire exploite donc la puissance thermique excédentaire à la manière d'un générateur de co-conversion. En d'autres termes, il produit de l'électricité et de la chaleur avec la particularité que la puissance thermique n'est pas fournie par une combustion en phase gazeuse mais par la réaction d'OHT. Ce circuit est basé sur un équipement de type turbogénérateur dans un cycle de Brayton.

L'invention s'applique avantageusement au traitement des effluents organiques de l'industrie nucléaire. En effet, les contraintes posées par les autorités de sûreté nucléaire contraignent à la miniaturisation des procédés de traitement des fluides chargés en radio-contaminants. L'OHT a fait la preuve de son applicabilité aux effluents organiques contaminés liquides.

Dans le cas du traitement d'effluents fortement salins, le procédé de filtration en condition supercritique de l'invention s'applique avantageusement à la décontamination des effluents aqueux ou organiques par séparation physique, avec production d'un flux minoritaire concentrant l'activité et les éléments minéraux.

### Référence

[1] Goemans M.G.E., Li., Gloyna E.F., Séparation of inorganics salts from supercritical water by cross-flow micro filtration, Sep. Sci. Tech. 30(7-9), pp 1491-1509, 1995.

## Revendications

1. Réacteur pour le traitement d'une matière dans un milieu, comportant un corps (2) dans lequel est définie une zone réactionnelle (10) apte à contenir un milieu réactionnel, au moins une entrée pour l'introduction du milieu réactionnel dans la zone réactionnelle, au moins une sortie pour l'évacuation d'effluents hors de la zone réactionnelle, **caractérisé en ce que** le réacteur comporte :
- une enveloppe protectrice (8) disposée à l'intérieur du corps (2) et délimitant la zone réactionnelle, l'enveloppe étant espacée du corps de manière à délimiter une zone de confinement (12) isolant la zone réactionnelle du corps, la zone réactionnelle et la zone de confinement étant isolées l'une de l'autre de manière étanche, et dans lequel la zone réactionnelle (10) contient un milieu fluide sous pression, la zone de confinement (12) contenant un fluide de confinement en surpression par rapport à la pression du fluide de la zone réactionnelle ;
- un dispositif de mesure (68) pour mesurer une consommation de fluide de confinement (62) en cas de rupture de l'étanchéité de l'enveloppe protectrice ;
- une capacité de pressurisation (60) contenant une quantité de fluide de confinement (62), la capacité de pressurisation étant reliée à la zone de confinement par une canalisation (50) de manière à permettre l'alimentation (45) de la zone de confinement en fluide de confinement ;
- une canalisation d'alimentation de la zone réactionnelle en milieu fluide réactionnel ;
- un piquage (62) reliant la canalisation d'alimentation de la zone réactionnelle à la capacité de pressurisation (60) de manière à mettre le fluide de confinement à la pression du milieu fluide réactionnel ;
- un clapet anti-retour à chute de pression (66) étant interposé entre le piquage et la zone réactionnelle afin de créer une différence de pression entre la pression du fluide de confinement dans la capacité de pressurisation et la pression du milieu fluide réactionnel dans la zone réactionnelle ;
- un moyen de mesure (68) mesurant une consommation du fluide de confinement contenu dans la capacité de pressurisation ;
- un échangeur de chaleur (14) disposé dans la zone de confinement (12) et intégré à un circuit primaire de circulation d'un fluide caloporteur (100) afin de réaliser un échange de chaleur entre le fluide caloporteur circulant dans l'échangeur (14) et le milieu réactionnel contenu dans la zone réactionnelle ;
- un tube interne (15) placé à l'intérieur de l'enveloppe protectrice (8) et lié de manière étanche à une première extrémité au corps (2) ou à l'enveloppe protectrice (8), le volume intérieur du tube étanche déterminant une zone centrale (20), le tube délimitant une zone annulaire (22) avec l'enveloppe protectrice, un passage de communication entre la zone centrale du tube et la zone annulaire étant prévu à une seconde extrémité (15a) du tube ; et
- une turbine d'agitation (24) comportant des pales (32) brassant le milieu réactionnel de la zone centrale et des pales (34) brassant le milieu réactionnel de la zone annulaire.

2. Réacteur selon la revendication 1, **caractérisé en ce que** le circuit primaire de circulation du fluide caloporteur (100) intègre un échangeur secondaire (104) et/ou une résistance électrique (108) asservis à l'extraction, respectivement à l'apport, de puissance thermique de/à la zone réactionnelle.

3. Réacteur selon la revendication 2, **caractérisé en ce que** la puissance thermique extraite du circuit primaire (100) est valorisée sous forme d'énergie électrique, de puissance de chauffe ou d'énergie pneumatique.

4. Réacteur selon la revendication 1, **caractérisé en ce que** la turbine comporte un axe (26) monté tournant sur le corps et/ou sur l'enveloppe protectrice, l'axe portant des pales internes (32) situées dans la zone centrale (20) du tube interne et/ou des pales externes (34) situées dans la zone annulaire (22).

5. Réacteur selon l'une des revendications 1 à 4, caractérisé zn ce qu'il comporte un filtre (40) pour séparer le milieu réactionnel en un perméat débarrassé de ses précipités et un rétentat concentrant les sels et une turbine d'agitation (24) permettant de brasser le milieu réactionnel afin de le maintenir dans un régime hydraulique turbulent et empêcher une accumulation de rétentat solide devant le filtre.

6. Réacteur selon la revendication 5, **caractérisé en ce que** le filtre (40) présente la forme d'un cylindre disposé coaxialement au tube interne (13) .

7. Réacteur selon l'une des revendications 1 à 6, **caractérisé en ce qu'**il comporte une sortie d'un effluent liquide/gaz, l'effluent traversant un échangeur de chaleur (43), par exemple un serpentin, de manière à être en relation d'échange thermique avec la matière à traiter.

## Patentansprüche

1. Reaktor zur Behandlung eines Materials in einem Medium, enthaltend einen Körper (2), in welchem ein Reaktionsbereich (10) definiert ist, das dazu geeignet ist, ein Reaktionsmedium zu enthalten, zumindest einen Einlass zum Einleiten des Reaktionsmediums in den Reaktionsbereich, zumindest einen Auslass zum Ableiten eines Abstroms aus dem Reaktionsbereich,
**dadurch gekennzeichnet, dass** der Reaktor enthält:
- eine Schutzhülle (8), die innerhalb des Körpers (2) angeordnet ist und den Reaktionsbereich eingrenzt, wobei die Hülle von dem Körper beabstandet ist, so dass sie einen Sicherheitsbereich (12) eingrenzt, welcher den Reaktionsbereich vom Körper trennt, wobei der Reaktionsbereich und der Sicherheitsbereich in dichter Weise voneinander getrennt sind, und wobei der Reaktionsbereich (10) ein unter Druck stehendes, fluides Medium enthält, wobei der Sicherheitsbereich (12) ein Sicherheitsfluid enthält, das bezogen auf den Druck des Fluids des Reaktionsbereichs unter Überdruck steht;
- eine Messvorrichtung (68) zum Messen eines Verbrauchs an Sicherheitsfluid (62) im Falle einer Undichtigkeit der Schutzhülle;
- eine Druckbeaufschlagungskammer (60), die eine Menge an Sicherheitsfluid (62) enthält, wobei die Druckbeaufschlagungskammer über einen Kanal (50) mit dem Sicherheitsbereich so verbunden ist, dass sie das Versorgen (45) des Sicherheitsbereichs mit Sicherheitsfluid gestattet;
- einen Versorgungskanal zum Versorgen des Reaktionsbereichs mit fluidem Reaktionsmedium;
- eine Abzweigung (62), die den Versorgungskanal des Reaktionsbereichs mit der Druckbeaufschlagungskammer (60) so verbindet, dass das Sicherheitsfluid mit dem Druck des fluiden Reaktionsmediums beaufschlagt wird;
- wobei ein Druckabfall-Rückschlagventil (66) zwischen Abzweigung und Reaktionsbereich eingesetzt ist, um einen Druckunterschied zwischen dem Druck des Sicherheitsfluids in der Druckbeaufschlagungskammer und dem Druck des fluiden Reaktionsmediums in dem Reaktionsbereich zu schaffen;
- eine Messeinrichtung (68) zum Messen eines Verbrauchs an in der Druckbeaufschlagungskammer enthaltenden Sicherheitsfluid;
- einen Wärmetauscher (14), der in dem Sicherheitsbereich (12) angeordnet ist und einem primären Zirkulationskreis eines Wärmeträgerfluids (100) integriert ist, um einen Wärmeaustausch zwischen dem in dem Tauscher (14) zirkulierenden Wärmeträgerfluid und dem in dem Reaktionsbereich enthaltenen Reaktionsmedium durchzuführen;
- ein Innenrohr (15), das innerhalb der Schutzhülle (8) angeordnet ist und an einem ersten Ende in dichter Weise mit dem Körper (2) oder mit der Schutzhülle (8) verbunden ist, wobei das Innenvolumen des dichten Rohrs einen Zentralbereich (20) bestimmt, wobei das Rohr einen ringförmigen Bereich (22) mit der Schutzhülle eingrenzt, wobei ein Verbindungsdurchgang zwischen dem Zentralbereich des Rohrs und dem ringförmigen Bereich an einem zweiten Ende (15a) des Rohrs vorgesehen ist; und
- eine Rührturbine (24) mit Schaufeln (32), die das Reaktionsmedium des Zentralbereichs aufrühren, und mit Schaufeln (34), die das Reaktionsmedium des ringförmigen Bereichs aufrühren.

2. Reaktor nach Anspruch 1, **dadurch gekennzeichnet, dass** der primäre Zirkulationskreis des Wärmeträgerfluids (100) einen sekundären Tauscher (104) und/oder einen elektrischen Widerstand (108) enthält, die durch Abfuhr bzw. Zufuhr von Wärmeleistung aus bzw. zu dem Reaktionsbereich gesteuert werden.

3. Reaktor nach Anspruch 2, **dadurch gekennzeichnet, dass** die aus dem Primärkreis (100) abgeführte Wärmeleistung in Form von elektrischer Energie, Heizleistung oder pneumatischer Energie rückgewonnen wird.

4. Reaktor nach Anspruch 1, **dadurch gekennzeichnet, dass** die Turbine eine Achse (26) aufweist, die an dem Körper und/oder an der Schutzhülle drehend gelagert ist, wobei die Achse die in dem Zentralbereich (20) des Innenrohrs befindlichen Innenschaufeln (32) und/oder die in dem ringförmigen Bereich (22) befindlichen Außenschaufeln (34) trägt.

5. Reaktor nach einem der Ansprüche 1 bis 4, **dadurch gekennzeichnet, dass** er einen Filter (40) zum Trennen des Reaktionsmediums in ein von seinen Ausfällungen befreites Permeat und in ein Salze konzentrierendes Retentat sowie eine Rührturbine (24) enthält, mit der das Reaktionsmedium aufgerührt werden kann, um es in einem turbulenten Strömungsverhältnis zu halten und eine Ansammlung von festem Retentat vor dem Filter zu verhindern.

6. Reaktor nach Anspruch 5, **dadurch gekennzeichnet, dass** der Filter (40) in Form eines Zylinders vorliegt, der koaxial zum Innenrohr (13) angeordnet ist.

7. Reaktor nach einem der Ansprüche 1 bis 6, **dadurch gekennzeichnet, dass** er einen Auslass für einen Flüssigkeits-/Gas-Abstrom aufweist, wobei der Abstrom einen Wärmetauscher (43), beispielsweise eine Rohrschlange, durchströmt, so dass er mit dem zu behandelnden Material in Wärmeaustausch tritt.

## Claims

1. A reactor for treating a material in a medium, including a body (2) in which is defined a reaction area (10) capable of containing a reaction medium, at least one inlet for introducing the reaction medium into the reaction area, at least one outlet for discharging effluents out of the reaction area, **characterized in that** the reactor includes:
- a protective casing (8) positioned inside the body (2) and delimiting the reaction area, the casing being spaced apart from the body so as to delimit a confinement area (12) isolating the reaction area from the body, the reaction area and the confinement area being sealably isolated from each other, and wherein the reaction area (10) contains a fluid medium under pressure, the confinement area (12) containing a confinement fluid in overpressure relative to the pressure of the fluid of the reaction area;
- a measuring device (68) for measuring consumption of confinement fluid (62) in the case of failure of the seal of the protective casing;
- a pressurization capacity (60) containing an amount of confinement fluid (62), the pressurization capacity being connected to the confinement area by a conduit (50) so that the confinement area may be fed (45) with confinement fluid;
- a conduit for feeding the reaction area with reaction fluid medium;
- a tapping (62) connecting the conduit for feeding the reaction area to the pressurization capacity (60) so as to set the confinement fluid to the pressure of the reaction fluid medium;
- an anti-return valve (66) with pressure drop being interposed between the tapping and the reaction area in order to generate a pressure difference between the pressure of the confinement fluid in the pressurization capacity and the pressure of the reaction fluid medium in the reaction area;
- a measuring means (68) measuring consumption of the confinement fluid contained in the pressurization capacity;
- a heat exchanger (14) positioned in the confinement area (12) and integrated to a primary circuit (100) for circulating a heat transfer fluid in order to achieve heat exchange between the heat transfer fluid flowing in the exchanger (14) and the reaction medium contained in the reaction area;
- an internal tube (15) placed inside the protective casing (8) and sealably attached to the body (2) at a first end or to the protective casing (8), the interior volume of the sealed tube determining a central area (20), the tube delimiting a ring-shaped area (22) with the protective casing, a passage for communication between the central area of the tube and the ring-shaped area being provided at a second end (15a) of the tube; and
- a stirring turbine (24) including blades (32) stirring up the reaction medium of the central area and blades (34) stirring up the reaction medium of the ring-shaped area.

2. The reactor according to claim 1, **characterized in that** the heat transfer fluid flow primary circuit (100) integrates a secondary exchanger (104) and/or an electrical resistor (108) servo-controlled by extracting, respectively providing heat power from/to the reaction area.

3. The reactor according to claim 2, **characterized in that** the heat power extracted from the primary circuit (100) is utilized as electric energy, heating power or pneumatic energy.

4. The reactor according to claim 1, **characterized in that** the turbine includes a shaft (26) rotatably mounted onto the body and/or the protective casing, the shaft bearing internal blades (32) located in the central area (20) of the internal tube and/or external blades (34) located in the ring-shaped area (22).

5. The reactor according to any of claims 1 to 4, **characterized in that** it includes a filter (40) for separating the reaction medium into a permeate with its precipitates having been cleared therefrom and a retentate concentrating the salts and a stirring turbine (24) with which the reaction medium may be stirred up in order to keep it under a turbulent hydraulic flow condition and prevent build-up of solid retentate in front of the filter.

6. The reactor according to claim 5, **characterized in that** the filter (40) has the shape of a cylinder positioned coaxially with the internal tube (13).

7. The reactor according to any of claims 1 to 6, **characterized in that** it includes an outlet for a liquid/gas effluent, the effluent passing through a heat exchanger (43), for example a coil, so as to be in a heat exchange relationship with the material to be treated.
